# EUROPÄISCHE PATENTSCHRIFT

(11) **EP 2 464 898 B1**
(45) Veröffentlichungstag und Bekanntmachung des Hinweises auf die Patenterteilung: **26.02.2014**
(21) Anmeldenummer: 10739890.1
(22) Anmeldetag: 29.07.2010
(51) Int. Cl.: F16H 57/039, F16H 25/20

(54) **SPINDELGETRIEBE SOWIE ELEKTROMOTORISCHER SPINDELANTRIEB**
SPINDLE GEARBOX AND ELECTRIC MOTOR SPINDLE DRIVE
MÉCANISME À BROCHE ET ENTRAÎNEMENT DE BROCHE PAR MOTEUR ÉLECTRIQUE

(30) Priorität: 14.08.2009 DE 102009028536
(43) Veröffentlichungstag der Anmeldung: 20.06.2012
(73) Patentinhaber: Robert Bosch GmbH, 70442 Stuttgart (DE)
(72) Erfinder: STOCK, Andreas, 76185 Karlsruhe (DE); PIERSON, Andrew, 77815 Buehl (DE); KLOEPFER, Sonja, 77833 Ottersweier (DE)
(86) Internationale Anmeldenummer: PCT/EP2010/061006
(87) Internationale Veröffentlichungsnummer: WO 2011/018341

(56) Entgegenhaltungen:
- EP-A1- 2 175 167
- EP-A2- 1 930 204
- DE-A1- 10 250 994
- DE-A1-102007 060 882

## Beschreibung

Die Erfindung betrifft ein Spindelgetriebe mit wenigstens einer antreibbaren Schnecke, die mit einem in einem Gehäuse axial beidseitig gelagerten Schneckenrad einer Gewindespindel kämmt, entsprechend dem Oberbegriff des Anspruchs 1 und wie es aus Dokument EP 1 930 204 bekannt ist.

Ferner betrifft die Erfindung einen elektromotorischen Spindelantrieb mit einem Spindelgetriebe und einem an einem Gehäuse des Spindelgetriebes befestigten und mit dem Spindelgetriebe zusammenwirkenden Elektromotor.

### Stand der Technik

Spindelgetriebe sowie elektromotorische Spindelantriebe sind aus dem Stand der Technik bekannt. Insbesondere in der Automobilindustrie finden Spindelgetriebe vielerlei Anwendung. So sind Spindelantriebe als Aktuatoren für die unterschiedlichsten Funktionen gebräuchlich. Neben den im Betrieb auftretenden Kräften müssen auch von außen einwirkende Kräfte von dem Spindelgetriebe ausgehalten werden. Heutzutage werden die beweglichen Einzelteile eines derartigen Spindelgetriebes in einem Gehäuse gehalten, das aus Spritzguss gefertigt ist. Insbesondere das Schneckenrad der Gewindespindel ist dabei axial beidseitig in dem Gehäuse gelagert, um die auf die Gewindespindel einwirkenden Axialkräfte abzustützen.

Andere Konzepte, wie sie beispielsweise in der Offenlegungsschrift US 2008/0264201 A1 beschrieben sind, verwenden mehrere Plattenelemente, die miteinander verbunden werden, um axiale und radiale Lagerflächen für das Spindelgetriebe zur Verfügung zu stellen.

### Offenbarung der Erfindung

Das erfindungsgemäße Spindelgetriebe zeichnet sich dadurch aus, dass das Gehäuse als Blechbiegeteil ausgebildet ist. Mit anderen Worten wird das Gehäuse aus einem ursprünglich ebenen Blechelement gebildet, welches durch einen Biegeprozess die gewünschte Gehäuseform erhält. Hierdurch werden Material- sowie Montagekosten insbesondere im Vergleich zu bekannten Spindelgetrieben mit Kunststoff-Spritzgussgehäuse verringert. Darüber hinaus ist für ein derartiges Blechbiegeteil-Gehäuse nur ein geringer Bauraum erforderlich. Auch lässt sich durch ein derartiges Blechbiegeteil auf einfache Art und Weise eine Anpassung an Kundenwünsche umsetzen, ohne dass beispielsweise zunächst eine aufwendige Spritzguss-Form gestaltet werden muss. Die Ausbildung des Gehäuses als Blechbiegeteil führt letztendlich dazu, dass das Gehäuse zumindest im Wesentlichen einteilig ausgebildet ist, wodurch besonders vorteilhaft im Betrieb auftretende sowie von außen einwirkende Kräfte ausgehalten werden können.

Das Blechbiegeteil weist zwei Schenkel für seine im Wesentlichen U-förmige Ausbildung auf. Es ist also vorgesehen, dass das Blechbiegeteil im Wesentlichen U-förmig ausgebildet ist, also einen U-förmigen Querschnitt aufweist. Die umgebogenen Schenkel sind zweckmäßigerweise um 90° oder zumindest im Wesentlichen um 90° in die gleiche Richtung gebogen, sodass sie zumindest im Wesentlichen parallel zueinander ausgerichtet/angeordnet sind, und dadurch die U-Form des Blechbiegeteils beziehungsweise des Gehäuses gebildet wird. Bevorzugt ist zwischen den zwei Schenkeln das Schneckenrad angeordnet, wobei vorzugsweise das Schneckenrad stirnseitig mit den Schenkeln zusammenwirkt, sodass das Schneckenrad axial durch die Schenkel des Blechbiegeteils gelagert ist.

Weiterhin ist erfindungsgemäß vorgesehen, dass zumindest einer der Schenkel wenigstens eine insbesondere umgebogene Befestigungslasche aufweist. Bevorzugt weist das Blechbiegeteil dazu in seiner ebenen Ausgangsform eine im Wesentlichen T-förmige Kontur auf, wobei der Querbalken der T-Kontur endseitig die Befestigungslaschen bildet, die bei dem Biegevorgang zur Herstellung des Gehäuses zweckmäßigerweise nach hinten, also aus dem U herausgebogen werden. Die Befestigungslaschen weisen bevorzugt Bohrungen auf, die beispielsweise zum Einführen eines Befestigungsbolzens dienen, wodurch eine besonders einfach Befestigung des Gehäuses beispielsweise an einem Karosserieelement eines Kraftfahrzeugs möglich ist. Natürlich können die Befestigungslaschen auch zum Verschweißen, Verkleben, Verklemmen oder dergleichen genutzt werden.

Ferner ist erfindungsgemäß vorgesehen, dass sich durch beide Schenkel des Gehäuses beziehungsweise des Blechbiegeteils mindestens eine Durchgangsbohrung fluchtend erstreckt. Die Schenkel weisen also jeweils eine Durchgangsbohrung auf, die im zum Gehäuse gebogenen Zustand des Blechbiegeteils fluchtend zueinander ausgerichtet sind. Durch die Bohrungen erstreckt sich bevorzugt eine Schraube, mittels derer die Schenkel des Gehäuses gegeneinander verspannt werden können. Durch eine entsprechende Anzugskraft der entsprechenden Schraube ist es möglich, durch bevorzugt elastische Verformung der Schenkel eine axial spielfreie Lagerung des zwischen den Schenkeln angeordneten Schneckenrads zu erhalten. Die Durchgangsbohrung weist in zumindest einem der Schenkel ein Gewinde auf, mit welchem die Schraube, die an dem anderen Schenkel mit ihrem Schraubenkopf aufliegt, zusammenwirkt. Anstelle des Gewindes kann natürlich auch eine Schraubenmutter an dem anderen Schenkel angeordnet sein.

Eine vorteilhafte Weiterbildung sieht vor, dass in wenigstens einem der Schenkel eine Aussparung ausgebildet ist, durch die die Gewindespindel hindurchragt. Die Aussparung bildet zweckmäßigerweise ein Radiallager für die Gewindespindel. Durch die Ausbildung als Blechbiegeteil werden hierdurch besonders hohe Radial-Lagerkräfte ermöglicht.

Bevorzugt ist die Gewindespindel als Drehspindel oder als Tauchspindel ausgebildet. Die Drehspindel weist einen Drehschaft auf, der drehfest mit dem Schneckenrad verbunden ist, und somit mit dem Schneckenrad mitgedreht wird. Dabei vollzieht die Drehspindel eine rein rotatorische Bewegung. Das Schneckenrad weist bevorzugt eine Schrägverzahnung auf, die eine besonders effiziente Kraftübertragung von der Schnecke auf die Gewindespindel ermöglicht. Die Tauchspindel hingegen erfährt anstelle der Rotation eine translatorische Bewegung. Dazu ist der Schaft der Tauchspindel axial beweglich in dem Schneckenrad gelagert. Eine Drehbewegung des Schneckenrads, angetrieben durch die Schnecke, bewirkt dabei eine Bewegung des Schafts der Tauchspindel in axialer Richtung, also in Richtung ihrer Längserstreckung. Zweckmäßigerweise ist die Aussparung randoffen ausgebildet, sodass der drehfest mit dem Schneckenrad verbundene Schaft der Gewindespindel radial in die Aussparung beziehungsweise in das Lager eingesetzt werden kann.

Ist die Gewindespindel als Tauchspindel ausgebildet, so ist bevorzugt in dem anderen Schenkel fluchtend zu der Aussparung ein Durchbruch für die Tauchspindel ausgebildet. Der Durchbruch ist zweckmäßigerweise derart dimensioniert, dass die Tauchspindel durch den Durchbruch hindurch verfahren werden kann. Hierdurch wird ein großer Verfahrweg der Tauchspindel ermöglicht, da sie hierdurch im Wesentlichen insgesamt durch das Schneckenrad hindurch verfahrbar ist.

Der elektromotorische Spindelantrieb zeichnet sich durch ein Spindelgetriebe wie es oben beschrieben wurde aus. Bevorzugt ist der Elektromotor an dem Blechbiegeteil beziehungsweise an dem Gehäuse verschraubt. Durch die Ausbildung als Blechbiegeteil sind die jeweiligen Verschraubungen einfach realisierbar und erlauben zum anderen hohe Belastungen, denen beispielsweise ein Kunststoffgehäuse mit darin eingearbeiteten Gewinden nicht standhalten könnte.

Insgesamt bietet sich somit ein besonders günstig herzustellender, stabiler sowie leichter und Bauraum sparender Spindelantrieb.

Im Folgenden soll die Erfindung anhand von Ausführungsbeispielen näher erläutert werden. Dazu zeigen
- Figur 1: ein vorteilhaftes Spindelgetriebe in einer Seitenansicht,
- Figur 2: ein vorteilhaftes Gehäuse des Spindelgetriebes in einer perspektivischen Darstellung,
- Figur 3: einen vorteilhaften Spindelantrieb mit einer Drehspindel in einer perspektivischen Explosionsdarstellung und
- Figur 4: den Spindelantrieb mit einer Tauchspindel in einer perspektivischen Explosionsdarstellung.

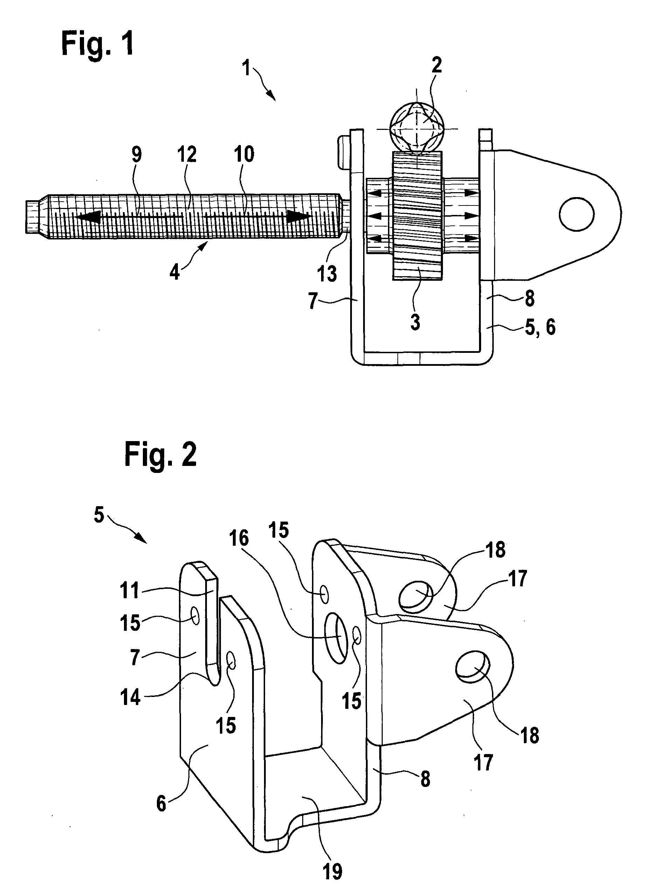

Die Figur 1 zeigt in einer Seitenansicht ein Ausführungsbeispiel eines vorteilhaften Spindelgetriebes 1. Das Spindelgetriebe 1 weist eine beispielsweise durch einen Elektromotor eintreibbare Schnecke 2 auf, die mit einem Schneckenrad 3 einer Gewindespindel 4 kämmt. Das Spindelgetriebe 1 weist weiterhin ein Gehäuse 5 auf, das vorteilhafterweise als Blechbiegteil 6 ausgebildet ist. In der Seitenansicht der Figur 1 ist hierbei eine vorteilhafte U-förmige Ausbildung des Blechbiegeteils 6 zu erkennen, die durch zwei umgebogene Schenkel 7, 8 gebildet wird. Die Schenkel 7, 8 liegen beabstandet zueinander und sind parallel zueinander ausgerichtet. Zwischen den Schenkeln liegt das Schneckenrad 3 der Gewindespindel 4 ein, wobei die freiliegenden Stirnseiten des Schneckenrads 3 mit den Innenseiten der Schenkel 7 beziehungsweise 8 zur axialen Lagerung des Schneckenrads 3 in dem Gehäuse 5 zusammenwirken. Dadurch können Zugkräfte, wie durch einen Pfeil 9 angedeutet, und Druckkräfte, wie durch einen Pfeil 10 angedeutet, die durch den Betrieb des Spindelgetriebes 1 auftreten, sowie von außen auf das Spindelgetriebe 1 einwirkende Kräfte durch das Gehäuse 5 beziehungsweise das Blechbiegeteil 6 sicher aufgenommen werden.

Das Blechbiegeteil dient als Aufnahme und Halter für die beweglichen Bestandteile des Spindelgetriebes 1 und gewährleistet auf einfache Art und Weise Festigkeit im System und schützt den Kraftfluss im Verstellbetrieb und auch im Crashfall. Durch die Ausbildung als Blechbiegeteil 6 ist das Gehäuse 5 besonders kostengünstig und einfach herstellbar, wobei minimale Material- und Herstellungskosten anfallen.

Die Figur 2 zeigt das Gehäuse 5 des Spindelgetriebes 1 in einer perspektivischen Darstellung. Zu erkennen ist hierbei, dass der Schenkel 7 eine Aussparung 11 aufweist, die randoffen zum freien Ende des Schenkels 7 hin ausgebildet ist. Im montierten Zustand, wie in der Figur 1 dargestellt, ragt die Gewindespindel 4 beziehungsweise ein Schaft 12 der Gewindespindel 4 durch die Aussparung 11 des Schenkels 7 hindurch. Durch die randoffene Ausbildung der Aussparung 11 kann die Gewindespindel 4 mit Schaft 12 und Schneckenrad 3 auf einfache Art und Weise radial in das Gehäuse 5 eingebracht werden, wobei der Schaft 12 radial in die Aussparung 11 eingelegt wird. Zweckmäßigerweise bilden die Aussparung 11 und ein Abschnitt 13 des Schafts 12 eine Radiallagerung der Gewindespindel 4 in dem Gehäuse 5. Zum Gewährleisten einer Gleitlagerung entspricht bevorzugt der Radius des Abschnitts 13 des Schafts 12 im Wesentlichen dem Radius der Aussparung 11 im Bodenbereich 14.

Weiterhin weist das Gehäuse 5 zwei Durchbohrungen 15 auf, die sich durch beide Schenkel 7, 8 fluchtend erstrecken. Bevorzugt weisen die Durchbohrungen 15 in dem Schenkel 8 oder in dem Schenkel 7 jeweils ein Gewinde auf, in welches eine durch die gegenüberliegende Durchbohrung 15 eingeführte Schraube eingeschraubt werden kann. Dadurch können die beiden Schenkel 7, 8 an ihren freien Enden aufeinanderzubewegt und dadurch das dazwischen befindliche Schneckenrad 3 axial verspannt werden. Hierdurch kann das Spindelgetriebe 1 axial spielfrei eingestellt werden. Zweckmäßigerweise sind die Durchbohrungen 15 dazu dem jeweiligen freien Ende der Schenkel 7 und 8 zugeordnet.

Der Schenkel 8 weist weiterhin einen optionalen Durchbruch 16 auf, der fluchtend zur Aussparung 11, und insbesondere zu deren Bodenbereich 14 angeordnet beziehungsweise ausgerichtet ist, und dessen Durchmesser größer ist als der Durchmesser des Schafts 12, wenn die Gewindespindel 4 als Tauchspindel ausgebildet ist.

Weiterhin weist der Schenkel 8 zwei Befestigungslaschen 17 auf, die derart umgebogen sind, dass sie von dem Schenkel 7 wegweisen. In seiner Ausgangsform weist das Blechbiegeteil 6 dazu eine im Wesentlichen T-förmige Kontur auf, wobei die Enden des Querbalkens im geformten Zustand die Befestigungslaschen 17 bilden. Ferner weisen die Befestigungslaschen jeweils eine miteinander fluchtende Durchbohrung 18 auf. Zur Befestigung des Gehäuses 5 beziehungsweise des Spindelgetriebes 1 an einem entsprechenden Halteelement kann beispielsweise ein Befestigungsbolzen durch die Durchbohrungen 18 sowie durch entsprechende Aufnahmen des Halteelements geschoben werden. Natürlich ist es auch denkbar, das Gehäuse 5 mittels der Befestigungslaschen 17 an einem anderen Element zu verkleben, zu verklemmen oder zu verschweißen. Auch können die Befestigungslaschen in der Ebene des Schenkels 8 liegen und mittels durch die Durchbohrungen 18 geführte Schrauben an einem Halteelement verschraubt werden. Natürlich können Befestigungslaschen auch im Bodenbereich oder am Schenkel 7 des Blechbiegeteils 6 angeordnet sein.

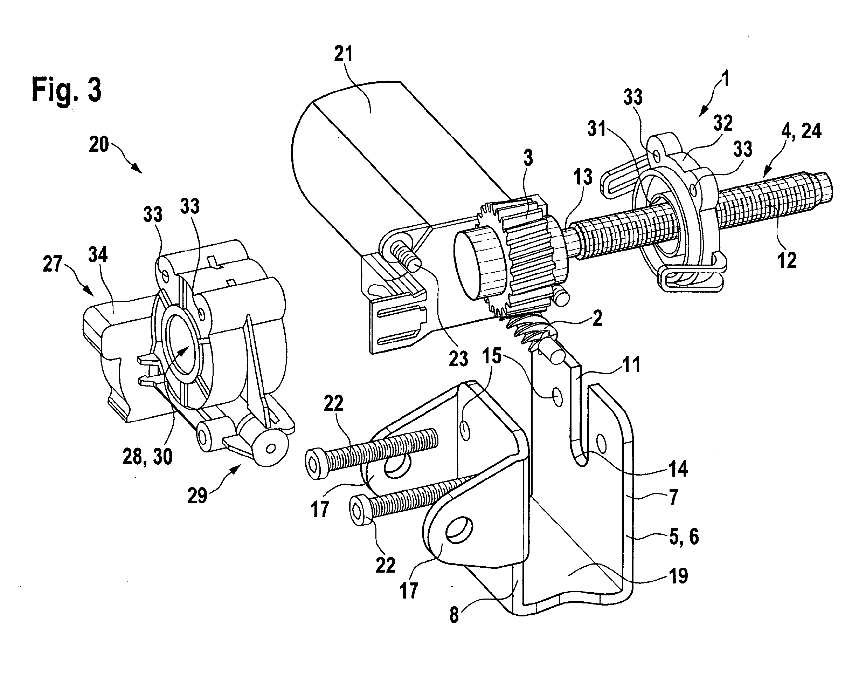

Die Figur 3 zeigt in einer perspektivischen Explosionsdarstellung einen elektromotorischen Spindelantrieb 20. Der Spindelantrieb 20 gemäß der Figur 3 umfasst das Spindelgetriebe 1 aus der Figur 1 sowie einen Elektromotor 21, der mit der Schnecke 2 des Spindelgetriebes 1 zum Antreiben des Spindelgetriebes 1 wirkverbunden ist. Insbesondere ist hierzu die Schnecke 2 mit einer Abtriebswelle des Elektromotors 21 drehfest verbunden oder auf dieser drehfest aufgebracht. Bei der Montage wird das Spindelgetriebe 1 zusammen mit dem Elektromotor 21 derart in das Gehäuse 5 eingebracht, dass der Abschnitt 13 radial in die Aussparung 11 bis zu dem Bodenbereich 14 eingebracht wird. Anschließend werden die Schenkel 7 und 8 mittels Schrauben 22, die in die Durchbohrungen 15 eingebracht werden, miteinander und insbesondere gegen das Schneckenrad 3 axial verspannt.

Die Gewindespindel 4 ist in dem vorliegenden Ausführungsbeispiel als Drehspindel 24 ausgebildet, sodass sie eine reine Rotationsbewegung im Betrieb durchführt. Von dem Gehäuse aufzufangende Axialkräfte entstehen dabei im Wesentlichen zwischen der Schrägverzahnung des Schneckenrads 3 und der damit antreibend kämmenden Schnecke 2.

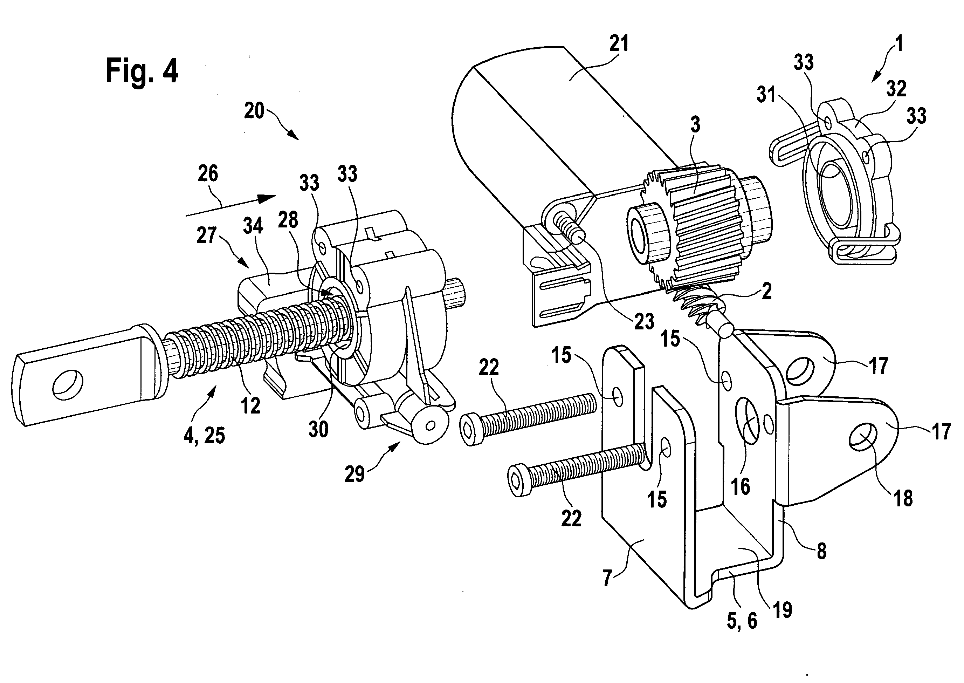

Die Figur 4 zeigt den Spindelantrieb 20 in einer alternativen Ausführungsform, bei der die Gewindespindel 4 als Tauchspindel 25 ausgebildet ist. Dazu ist der Schaft 12 axial verlagerbar in dem Schneckenrad 3 geführt, sodass die Rotationsbewegung des Schneckenrads 3 eine Linear- beziehungsweise Translationsbewegung des Schafts 12 bewirkt. Die Montage erfolgt wie bei dem oben beschriebenen Ausführungsbeispiel. Im Betrieb erlaubt der Durchbruch 16 in dem Schenkel 8, dass der Schaft 12 der Tauchspindel 25 derart weit in Richtung eines Pfeils 26 verlagert werden kann, dass sie durch den Schenkel 8 hindurchragt. Hierdurch kann ein weiter axialer Verfahrweg der Tauchspindel 25 gewährleistet werden.

Durch die Ausführung als Blechbiegeteil 6 erlaubt das Gehäuse 5 eine modulare Ausführung, die sich im Wesentlichen in zwei Bereiche unterteilen lässt. Ein Bereich der Standardausführung, der im Wesentlichen die Schenkel 7, 8 und den Boden 19 umfasst, erlaubt sowohl einen Links- oder Rechtsaufbau des Elektromotors 21 als auch die Aufnahme der Drehspindel 24 oder Tauchspindel 25. Zweckmäßigerweise ist hier auch eine Schnittstelle zu einem Getriebegehäuse vorgesehen. Im anderen Bereich, der im Wesentlichen die Befestigungslaschen 17 umfasst, befindet sich die anwendungsspezifische Ausführung, die die Art und Position des Kundenanschlusses abbildet. Weitere Anschlussmöglichkeiten - wie oben bereits gesagt - können problemlos auch oberhalb, unterhalb, rechts oder links von dem Elektromotor 21 realisiert werden. Durch das Anziehen der Schrauben 22 können axiale Toleranzen in dem Spindelgetriebe 1 ausgeglichen werden, um eine spielfreie Einheit zu erzeugen. Die axiale Lagerung des Schneckenrads 3 und/oder der Gewindespindel 4 wird in Druckrichtung bevorzugt entweder über ein Kugellager oder einen Anlaufbund (Gleitlagerung) realisiert. Bei der Verwendung eines Kugellagers wird das Blechbiegeteil 6 bevorzugt an der Anlaufstelle lokal gehärtet, um das Verschleißverhalten zu optimieren.

In den Figuren 3 und 4 ist weiterhin ein vorteilhaftes Gehäuseelement 27 dargestellt. Das Gehäuseelement 27 ist bevorzugt aus Kunststoff gefertigt und derart ausgebildet, dass es in das Blechbiegeteil 6 einsetzbar ist. Das Gehäuseelement 27 weist eine Aufnahme 28 für das Schneckenrad 3 sowie eine Aufnahme 29 für die Schnecke 2 auf. Die Aufnahme 28 ist vorteilhafterweise derart ausgebildet, dass sie ein erstes Radiallager 30 für das Schneckenrad 3 bildet. Ein zweites Radiallager 31 wird von einem Deckel 32 gebildet, der ebenfalls aus Kunststoff gefertigt und an dem Gehäuseelement 27 befestigbar ist. Die Aufnahme 29 für die Schnecke 2 ist entsprechend derart ausgebildet, dass sie ein Radial-und/oder Axiallager für die Schnecke 2 bildet. Das Gehäuseelement 27 ist zweckmäßigerweise derart ausgebildet, dass ein bestimmter, gewünschter Achsabstand zwischen dem Schneckenrad 3 und der Schnecke 2 gewährleistet und ein Lösen der Verzahnung, beispielsweise aufgrund zu hoher Kräfte, verhindert wird. In dem Gehäuseelement 27 sowie in dem Deckel 32 sind zweckmäßigerweise Durchbohrungen 33 ausgebildet, die mit den Durchbohrungen 15 fluchten, so dass die Schrauben 22 sowohl durch das Blechbiegeteil 6 als auch durch das Gehäuseelement 27 und den Deckel 32 geführt und somit das Gehäuseelement 27 und der Deckel 32 an dem Blechbiegeteil 6 befestigt werden. Vorteilhafterweise weist das Gehäuseelement 27 einen Befestigungsbereich 34 auf, an welchem der Elektromotor 21, beispielsweise mittels Schrauben 23, von denen hier lediglich eine erkennbar ist, befestigbar ist.

Vorteilhafterweise wird bei der Montage zunächst der Elektromotor 21 mit der Schnecke 2 in/an dem Gehäuseelement 27 angeordnet und daran mittels der Schrauben 23 befestigt. Danach wird das Schneckenrad 3 mit der Gewindespindel 4 in die Aufnahme 28 geführt und anschließend der Deckel 32 angebracht. Schließlich wird die so gebildete Vormontagegruppe in das Blechbiegeteil 6 zwischen die Schenkel 7 und 8 eingesetzt und mittels der Schrauben 22 daran befestigt. Hierdurch wird die Stabilität und Belastbarkeit des Spindelantriebs 20 auf einfache und kostengünstige Art und Weise weiter erhöht.

## Patentansprüche

1. Spindelgetriebe (1) mit wenigstens einer antreibbaren Schnecke (2), die mit einem in einem Gehäuse (5) axial beidseitig gelagerten Schneckenrad (3) einer Gewindespindel (4) kämmt, wobei das Gehäuse (5) als Blechbiegeteil (6) ausgebildet ist und zwei umgebogene Schenkel (7,8) für seine im Wesentlichen U-förmige Ausbildung aufweist, und wobei zumindest einer der Schenkel (8) wenigstens eine insbesondere umgebogene Befestigungslasche (17) aufweist, **dadurch gekennzeichnet, dass** sich durch beide Schenkel (7,8) mindestens eine Durchgangsbohrung (15) fluchtend erstreckt, die in zumindest einem der Schenkel (7,8) ein Gewinde aufweist.

2. Spindelgetriebe nach Anspruch 1, **dadurch gekennzeichnet, dass** in wenigstens einem der Schenkel (7) eine Aussparung (11) ausgebildet ist, durch die die Gewindespindel (4) hindurchragt.

3. Spindelgetriebe nach einem der vorhergehenden Ansprüche, **dadurch gekennzeichnet, dass** die Gewindespindel (4) als Drehspindel (24) oder als Tauchspindel (25) ausgebildet ist.

4. Spindelgetriebe nach einem der vorhergehenden Ansprüche, **dadurch gekennzeichnet, dass** die Aussparung (11) randoffen ausgebildet ist.

5. Spindelgetriebe nach einem der vorhergehenden Ansprüche, **dadurch gekennzeichnet, dass** in dem anderen Schenkel (8) fluchtend zu der Aussparung (11) ein Durchbruch (16) für die Tauchspindel (25) ausgebildet ist.

6. Elektromotorischer Spindelantrieb (20) mit einem Spindelgetriebe (1) und einem an einem Gehäuse (5) des Spindelgetriebes (1) befestigten und mit dem Spindelgetriebe (1) zusammenwirkenden Elektromotor (21), **gekennzeichnet durch** die Ausbildung des Spindelgetriebes (1) nach einem oder mehreren der vorhergehenden Ansprüche.

## Claims

1. Spindle gearbox (1) with at least one driveable worm (2) which meshes with a worm wheel (3), mounted axially on both sides in a housing (5), of a threaded spindle (4), the housing (5) being formed as a sheet-metal bent part (6) and having two bent-round legs (7, 8) for its essentially U-shaped form, and at least one of the legs (8) having at least one, in particular bent-round, fastening tab (17), **characterized in that** at least one through-bore (15) extends in alignment through both legs (7, 8) and has a thread in at least one of the legs (7, 8).

2. Spindle gearbox according to Claim 1, **characterized in that** a clearance (11), through which the threaded spindle (4) projects, is formed in at least one of the legs (7).

3. Spindle gearbox according to either of the preceding claims, **characterized in that** the threaded spindle (4) is formed as a rotary spindle (24) or as a plunger spindle (25).

4. Spindle gearbox according to one of the preceding claims, **characterized in that** the clearance (11) is formed so as to be open at the margin.

5. Spindle gearbox according to one of the preceding claims, **characterized in that** a perforation (16) for the plunger spindle (25) is formed in the other leg (8) in alignment with the clearance (11).

6. Electric motor spindle drive (20) with a spindle gearbox (1) and with an electric motor (21) fastened to a housing (5) of the spindle gearbox (1) and cooperating with the spindle gearbox (1), **characterized by** the form of the spindle gearbox (1) according to one or more of the preceding claims.

## Revendications

1. Mécanisme à broche (1) avec au moins une vis sans fin pouvant être entraînée (2), qui engrène avec une roue à vis (3) d'une broche filetée (4), ladite roue à vis étant supportée axialement de part et d'autre dans un boîtier (5), le boîtier (5) étant réalisé sous la forme d'une pièce pliée en tôle (6) et présentant deux ailes repliées (7, 8) qui lui donnent sa forme essentiellement en U, et au moins une des ailes (8) présentant au moins un oeillet de fixation (17) en particulier replié, **caractérisé en ce qu'**au moins un alésage de passage (15) s'étend en alignement à travers les deux ailes (7, 8) et présente un filetage dans au moins une des ailes (7, 8).

2. Mécanisme à broche selon la revendication 1, **caractérisé en ce qu'**une découpe (11) est pratiquée dans au moins une des ailes (7), à travers laquelle passe la broche filetée (4).

3. Mécanisme à broche selon l'une quelconque des revendications précédentes, **caractérisé en ce que** la broche filetée (4) est une broche rotative (24) ou une broche plongeante (25).

4. Mécanisme à broche selon l'une quelconque des revendications précédentes, **caractérisée en ce que** la découpe (11) est de forme ouverte vers le bord.

5. Mécanisme à broche selon l'une quelconque des revendications précédentes, **caractérisé en ce qu'**un passage (16) pour la broche plongeante (25) est pratiqué dans l'autre aile (8), en alignement avec la découpe (11).

6. Entraînement de broche (20) par moteur électrique avec un mécanisme à broche (1) et un moteur électrique (21) fixé à un boîtier (5) du mécanisme à broche (1) et coopérant avec le mécanisme à broche (1), **caractérisé par** la configuration du mécanisme à broche (1) selon une ou plusieurs des revendications précédentes.
